# EUROPEAN PATENT APPLICATION

(11) **EP 0 902 571 A2**
(43) Date of publication of application: **17.03.1999**
(21) Application number: 98850139.1
(22) Date of filing: 11.09.1998
(51) Int. Cl.: H04L 12/56, H04L 12/28, H04L 9/32

(54) **Method and arrangement relating to data communication**

(30) Priority: 12.09.1997 SE 9703327
(71) Applicant: TELEFONAKTIEBOLAGET LM ERICSSON, 126 25 Stockholm (SE)
(72) Inventor: Larsson, Martin, 653 45 Karlstad (SE)
(74) Representative: Hammond, Andrew

(57) **Abstract**

The present invention relates to an arrangement and method for providing wireless data communication services, between a client station (10) and a service providing station (15) and/or a computer network (13, 33), each of the client station (12), service providing station (15) or the computer network (13, 33) being connected to at least one radio transceiver (11, 12) and each being arranged with means (20, 30, 31) to convert data to be transmitted to data packets or data packets to data. The radio transceiver (11, 12) is arranged to transmit and/or receive data packets with at least one predetermined, by a user determined or randomly selected low radio frequency, said low radio frequency being within a range of about 1 kHz to about 30 MHz, preferably one or several of: 100-1800 kHz, 1810-1850 kHz, 3500-3800 kHz, 7000-7100 kHz, 10100-10150 kHz, 14000-14350 kHz, 18068-18168 kHz, 21000-21450 kHz, 24890-24990 kHz and 28000-29700 kHz bands.

## Description

### TECHNICAL FIELD OF THE INVENTION

The present invention relates to a method and arrangement for providing wireless data communication services between client stations and service provider station or computer networks. Communication is established by connecting radio transceivers to at least each one of the client stations, service providing stations or the computer networks and arranging them with means to convert the data to be transmitted to data packets or data packets to data.

Furthermore, the invention relates to a wireless computer network system implementing a modified point-to-point protocol.

### DESCRIPTION OF THE RELATED ART

Presently, several types of wireless data communication systems are known and used. In many of the wireless network systems, specially for offices and business sites each stationary or mobile computer communicates with each other and one or several servers through special transceivers connected to each computer and communicating with base stations arranged nearby. Usually, IR radiation is used for communication between the transceivers and the base stations.

Another well known wireless data communication system is Mobitex. Mobitex is a mobile data network that makes information available for mobile or stationary users using radio modems. It is a packet switching radio-based cellular system. The Mobitex network consists of communication cells including base stations and exchanges, which transmit text and data as digital packets between a central unit and a number of mobile units through high frequency radio signals. Mobitex is specially suitable for transmission of short messages where connection or switching time and silent line are essential and time-consuming. Basically, Mobitex is designed for small amounts of data having great demands on quick handling and security. Moreover, the Mobitex systems require special hardware and equipments.

A packet radio application is described in European Patent Application No. 251,382. A transceiver for packet radio networks comprises a plurality of independently tunable receivers and a single transmitter tunable to the frequencies of the receivers. The transceiver is operable to transmit, store and receive packets of data. The invention uses available narrow-band radio technology but enables the packet radio system to have increased capabilities.

The problem with the known network systems is that they do not provide any possibility to establish a global network without need for special equipment, relay stations such as satellites, repeater stations etc. For example after a natural catastrophe or an emergency situation in some part of the world, without access to auxiliary communication means such as telephone lines or mobile telephone facilities, it is not possible to provide a data communications network, for example for rescue workers, which facilitates their work by coming in contact with a server at a distant headquarter to receive information or establish audio/visual communications there through, e.g. using Internet etc.

Existing network systems do not provide facilities for a direct access of a distant or mobile terminal to the network. A travelling employee, for example, when connecting hers/his computer to the network of hers/his office, must use a modem to establish communication through telephone lines (or a mobile telephone) or other locally available equipments (if adaptable to the computer) to access the network.

### SUMMARY

The main object of the present invention is to provides a wireless data communication network, substantially based on packet radio, which allows communication over long (from about zero to several hundred kilometres) distances without need for very special equipments and relay stations.

There is also needed a wireless, preferably a global data communication network which can easily be adapted to the existing wire or radio-based communication networks.

What is needed is an arrangement which provides for a wireless data communication network, in which the position of the service provider site is not vitally important, the service provider can be mobile and limited to regional boundaries etc.

There is a need for a possibility of establishing a virtual network service without a (dedicated) telephone line, mobile telephone services, integrated services digital network (ISDN) etc., which makes it possible to connect to the network services if there are no accesses to public lines.

Moreover, what is needed is a wireless data communication arrangement, which allows error-free communications with high security.

For these reasons, a radio transceiver is arranged to transmit and/or receive data packets with at least one assigned, by the user determined or randomly selected low radio frequency. In a preferred embodiment the conversions means are terminal node controllers (TNCs). The TNC automatically divides computer generated messages to be transmitted into data packets with a destination address, keys a transmitting function of the transceiver and sends the data packets through the transceiver. The transceiver may be arranged to scan the low radio frequencies for detection of a data packet. In an advantageous embodiment the data is compressed before transmission and multiple packets are transmitted on each frequency and/or channels are shared and/or packets are arranged with digital signatures to increase the transmission speed. For security reasons the packets are encrypted.

Advantageously, the invention is implemented in an at least partly wireless data packet communication network system. The system includes at least one client workstation and at least one service provider station. The communication is carried out by means of radio signals generated by radio transmitting stations, connected to the client's workstation or service provider station. The client workstation and the service provider station each are arranged with means to generate a communication protocol which allows a Point to Point Protocol (PPP) to be tunnelled through an IP network over said radio transmitting stations. A reliable communication is obtained as the protocol queries the status of communicating stations, provides in-band management, allocated communication channels and place outgoing calls, notifies the service provider on incoming calls, transmits and receives user data with follow control in both directions, and notifies the service provider about disconnected calls. Moreover, the communication protocol uses an enhanced Generic Routing Encapsulation mechanism to provide a flow and congestion-controlled encapsulated data packets. An advantageous feature is that the tunnel is defined between pair of Wireless Network access Server and a communication protocol Access Concentrator.

To increase the communication speed, plurality of connection sessions is multiplexed on a single tunnel and the point-to-point protocol packets are multiplexed and demultiplexed over a single tunnel. The functions of the network are divided; the communication protocol Access Concentrator is arranged to interface a network and control radio transceivers or terminal adapters, logically terminate a communications session of a point-to-point-protocol link control protocol, and if needed participate in point-to-point-protocol authentication procedures; the Wireless Network access Server is arranged for channel aggregation and bundle management for point-to-point-protocol multilink protocol, logical termination of various point-to-point-protocol network control protocols and multiprotocol routing and bridging.

To obtain a global network the radio communication is carried out over a low frequency band, preferably in range of about 1 kHz to about 30000 kHz.

The invention also presents an advantageous method for wireless data communication between a client station and a service provider, each being arranged with means to generate data packets and each being connected to a radio transceiver. The method comprises arranging a direct communications path, so-called tunnel, between the client station and the service provider, generating a communication protocol which allows a Point to Point Protocol to be tunnelled through an Internet protocol network over said communication path, transmitting or receiving said communication protocol by means of said transceivers, and transferring said received communication protocol to or from a computer instruction signal. The reliability is achieved by establishing a Control Connection, controlling the tunnel and sessions assigned to the tunnel, maintaining a state for each client station connected, creating a session when an end-to-end point-to-point protocol connection is attempted between a client station and a Network access Server sending data packets related to a communication session over the tunnel between the communication protocol Access Concentrator and said Network access Server. The known structure of the method characterised by that the control connection is a standard transfer control protocol session over which communication protocol call control and management information are passed. In one embodiment, for each communication protocol Access Concentrator (WPAC) and Network access Server (WPNS) pair both a tunnel and a control connection exists.

According to the method the flow control through the tunnel is performed by a sliding window used on the communication protocol by each side of the data exchange. Preferably the sliding window protocol allows acknowledgment of multiple packets with a single acknowledgment, and all outstanding packets with a sequence number lower or equal to the acknowledgment number are considered acknowledged.

The network according to the invention is also arranged with a security arrangement. In one embodiment the client station is arranged with a security key and an authentication device is arranged to provide an additional layer of security, by verifying whether a client station requesting access to the service provider station posses the security key before access to the service provider is accepted. In another embodiment, the security arrangement consists of two hardware devices: a security host and a security card, the security host being arranged between the service provider station and the communication means. The security card generates different access codes every time unit, which are synchronized with a code generated at the security host every time unit and at the connection time the client sends the code generated by the security card to the host and the code is correct, the security host accepts connection of the client with the service provider server. Yet another embodiment is possible, in which the security host prompts the client to enter a username and a password, said security host is arranged to allow the service provider station to initialize the communication means before running the security functions and to directly initialize the communication means connected to the security host without security checks from the security host, before access being accepted.

### BRIEF DESCRIPTION OF THE DRAWINGS

In the following, the invention will be further described in a non-limiting way under reference to the accompanying drawings in which:
- Fig. 1: is a block diagram illustrating a data communications network according to the invention.
- Fig. 2: is a block diagram of a workstation site embodiment according to the invention.
- Fig. 3: is a block diagram illustrating a second embodiment of the data communication network according to the invention.

### DETAILED DESCRIPTION OF THE EMBODIMENTS

The arrangement according to the present invention, in its simplest form, includes at least two computer units communicating with each other in a network like configuration, a so-called workgroup, over a low frequency radio connection using radio packets. In this kind of networking, each computer unit can act both as a server and a client terminal.

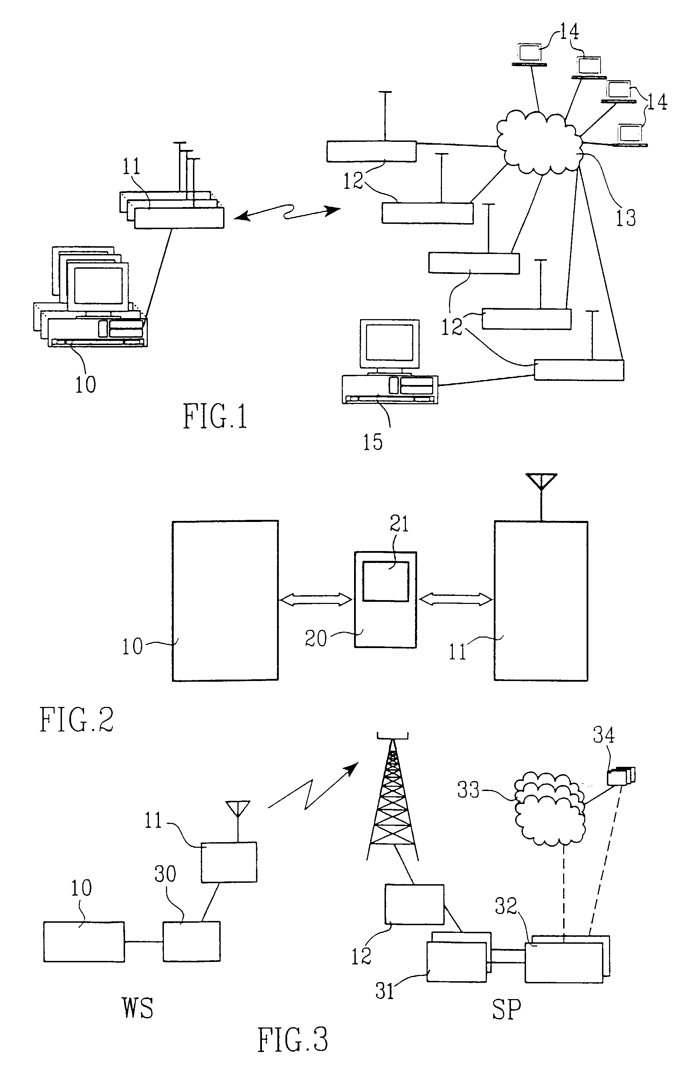

A more complicated embodiment of the arrangement is illustrated in fig. 1. The arrangement comprises a first computer terminal 10, for example a PC, connected to a radio transmitting and receiving unit, so-called transceiver unit 11 (TU). In this case, the computer unit and the transceiver unit 11 form the client workstation (WS) site of the data network arranged to access the network for services, such as file transfer, mailing, database handling, Intranet/Internet services etc. The network service provider (SP) site consists of one or several radio transceiver units 12, which can be connected either to a network 13 of computer terminals 14 and/or to one or several server units 15. The arrangement provides a wireless data communication network. The transceiver units 11 and 12 are arranged to operate in low-frequency bands, specially between about 1 to about 30000 kHz and particularly in one or more of 100-1800 kHz, 1810-1850 kHz, 3500-3800 kHz, 7000-7100 kHz, 10100-10150 kHz, 14000-14350 kHz, 18068-18168 kHz, 21000-21450 kHz, 24890-24990 kHz and 28000-29700 kHz bands (e.g. depending on which country or region transmission/reception is carried out.) The mentioned frequency bands, allow radio traffic of type I - Telegraphy and digital traffic (including packet radio) and on the highest frequency band also type II traffic, i.e. telephony, digital traffic (radio packets), SSTV (slow scan TV) and the facsimile, is possible.

The lower frequencies (1 - 30000 kHz) permit data communication over substantially unlimited distances between the workstation and the service provider (server or network) and no or very few link stations, repeaters or the like are needed. At the service provider site, the transceiver units 12 can be connected to gateways (not shown) to allow communication with different types of networks.

The workstation site is schematically illustrated in fig. 2. The signals from the computer unit 10 must be converted to radio packets before they are transmitted to the service provider. The conversion is carried out in a Terminal Node Controller (TNC) 20. TNC automatically divides the data messages to be transmitted into packets, keys the transmitter 11 and sends the packets to transmitting part of the transceiver unit 11. While receiving packets (from the SP), the TNC 20 automatically decodes, checks for errors, and transmits the decoded message to the computer unit 10. In a preferred embodiment the computer unit 10 is serially connected to TNC 20 using transmit, receive and ground pins. The TNC in turn is connected to the transceiver unit, for example through an audio connection using Push to Talk, Mid Audio, ground and Speaker Audio connections. Obviously, these types of connections are given as an example and other forms of connections such as parallel, infrared etc. may occur.

The transceiver unit may be a combined or standalone transmitter and receiver, which at least can transmit and receive in the specified low frequency region. In an embodiment (but not necessarily) a client site transceiver includes one transmitter and one receiver unit but the services provider site transceiver includes one or several transmitters and one or several receivers.

Packets have many advantages over other digital communication modes, e.g. transparency, error correction and automatic control. Hence, the packet radio provides error-free communications because of the built in error detection schemes. If a packet is received, it is checked for errors before being transferred to its destination. Moreover, packet radio, unlike voice communications, allows many users to simultaneously use the same frequency channel.

To allow multiple packet transmissions on each frequency, shared channels and digital signature on the packets can be applied. Different kinds of (realtime) encryptions can be used to increase the transmission security. Furthermore, data transmissions over a wireless packet network (switched or directed) are much more difficult to capture than voice transmissions, for instance over a cellular voice network. Unlike conversations in the cellular environment, which are continuos and easy to monitor by simple eardroppers, massages in form of packets are sent in bursts. Capturing such messages is only possible if the radio frequency interface can be descrambled, which requires sophisticated equipments.

In an advantage embodiment a security host can be engaged. A security host is an authentication device that verifies whether a caller from a remote client is authorized to connect to the remote access server of the service provider. This verification may be a supplement to the security measurements already implemented at the remote access server. The security hosts may be a third-part application. The security host sits can be arranged between the remote client and the remote access server. The security host generally provides an additional layer of security by requiring a hardware key of some kind in order to provide authentication. Verification that the remote client physically posses the key takes place before access to the remote access server is accepted. This open architecture allows clients/customers to choose from a variety of security hosts to augment the security in the remote access server.

In an application, for example, a security system consists of two hardware devices: the security host and the security card. The security host is installed between the remote access server and its TNC (modem). The security card is a small unit, e.g. in size of a credit card. The security card displays different access codes every time unit. This number is synchronized with a code generated at a security host every time unit. When connecting, the remote client sends the code generated by the security card to the host. If the code is correct, the security host accepts connection of the remote client with the remote access server.

In yet another application, a security host prompts the remote client to enter a username (which may or may not be the same as the remote access usemame) and a password (which differs from the remote access password). The security host must be configured to allow Remote access server to initialize the communication means before the security functions take affect. The remote access server must also be able to directly initialize the communication means connected to the security host without security checks from the security host. The security host might interpret the remote access server's attempt to initialize the communication means as an attempt to dial out.

Depending on the used transmission frequency, modulation type and data compression of the packets, it is possible to obtain a transmission speed of from 1200 bps to 512000 bps (bits per second). Any known data compression technics can be used. The data compression mechanism can be integrated in the communication software, in the computer units, the TNC or the transceivers.

The communication protocol may be one or several known protocols, such as X.25, AX25, Dual, VANCOUVER, TCP/IP, etc. AX.25 (Amateur X.25) is similar to X.25 level 2 in structure with some extensions to make it more useful in the amateur radio environment, specifies channel access (ability to transmit on the channel) to be handled by a Carrier Sense Multiple Access (CSMA).

When a transmission is required, the TNC monitors the channel to see if someone else is transmitting. If no one else is transmitting, then the radio keys up and the TNC sends its packet. All other transmitting stations (transceivers) detect the packet and do not transmit until the packet transmission is done. A collision may arise if two or more radio stations transmit at same time. If a collision occurs, none of TNC's will receive a reply back from the last packet it sent. Each TNC will then wait a random amount of time and then retransmit the packet. The AX.25 protocol offers both connected and connectionless operation modes, and may be used either for point-to-point links, or to carry other protocols such as TCP/IP (Transmission Control Protocol/Internet Protocol) and NetRom. NetRom protocol uses AX.25 at its lowest layer as a data-link protocol and it features dynamic routing and node aliases.

DUAL protocol is configured to support connectionless-mode operations and it is designed to accept packets from higher layers. The receiving entity takes no remedial actions; if the frame is in error, it is discarded and the receiver is not informed about the loss of the traffic.

Substantially, the same transmission, packeting and un packeting procedures run on the workstation site are also run at the service provider site. At the service provider site, however, the TNC's may be connected to gateways to adapt the communication protocols to suitable network protocols.

Advantageously, another preferred protocol for the wireless data network according to the invention is a modified protocol which allows a Point to Point Protocol (PPP) to be tunnelled through an IP network, so-called WPPTP. WPPTP does not specify any changes to the PPP protocol but rather describes a new vehicle for carrying PPP. The WPPTP protocol is designed to perform following tasks:
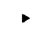 Query the status of communication servers,
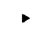 provide In-Band management,
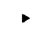 allocate channels and place outgoing calls,
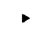 notify the server on incoming calls,
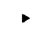 transmit and receive user data with follow control in both directions, and
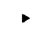 notify the server about disconnected calls.

Moreover, WPPTP uses an enhanced Generic Routing Encapsulation (GRE) mechanism to provide a flow- and congestion-controlled encapsulated datagram service for carrying PPP packets.

To establish a communications path, a tunnel is defined between a pair of Wireless Network access Server (WPNS) and WPPTP Access Concentrator (WPAC). The tunnel carries PPP datagrams (radio packets) between the WPAC and the WPNS. Many sessions can be multiplexed on a single tunnel. A control connection operating over TCP controls the establishment, release, and maintenance of sessions and of the tunnel itself.

Fig. 3 illustrates a communications network implementing WPPTP. WPNS 31 can operate on general-purpose (wireless) computing/server platforms. The WPNS 31 handles the server side of the WPPTP protocol. Since WPPTP relies completely on TCP/IP and is independent of the interface hardware, the WPNS may use any combination of IP interface hardware including LAN and WAN devices. WPAC 30 is a device attached to one or more transceivers 11. The WPAC 30 needs only implement TCP/IP to pass traffic to one or more WPNSs. It may also tunnel non-IP protocols.

WPPTP allows functions of existing Network Access Servers (WNAS) 32, i.e. a device providing workstations temporary, on-demand point-to-point wireless network access, to be separated using a client-server architecture. The implemented functions by a WNAS 32 may be:
1) Interfacing network 33 and control of external radio transceivers or terminal adapters. A WNAS 32 may interface directly to the wireless network 33 or an analog or digital network circuit 34 or attach via an external modem or terminal adapter. (The WNAS may handle frequency adaption, analog to digital conversion, sync to async conversion or a number of other alterations of data streams such as integrated TNC functions.)
2) Logical termination of a Point-to-Point-Protocol (PPP) Link Control Protocol (LCP) session.
3) Participation in PPP authentication protocols.
4) Channel aggregation and bundle management for PPP Multilink Protocol.
5) Logical termination of various PPP network control protocols (NCP).
6) Multiprotocol routing and bridging between NAS interfaces (wireless to wire based etc.).

According to the invention, WPPTP divides these functions between the WPAC and WPNS. The WPAC may be responsible for functions 1, 2, and possibly 3. The WPNS may be responsible for function 3 and is responsible for functions 4, 5, and 6. WPPTP will address the protocol used to carry PPP protocol data units (WPDUs) between the WPAC and WPNS, as well as call control and management.

By decoupling WNAS functions, a flexible IP address management is obtained. Each calling workstation may maintain a single IP address as they connect to different WPACs as long as they are served from a common WPNS. If, for example, an enterprise network uses unregistered addresses, a WPNS associated with the enterprise will assign addresses meaningful to a connecting network. It is also possible to support non-IP protocols for dial networks behind IP networks. This allows known network protocols, such as Appletalk and IPX, for example to be tunnelled through an IP-only provider. The WPAC dose does not need to be capable of processing these protocols. Moreover, a multilink PPP bundle can be handled by a single WPNS, the frequencies comprising the bundle may be spread across multiple WPACs.

When a workstation tries to connect to a service provider, a Control Connection, which governs aspects of the tunnel and of sessions assigned to the tunnel, is established between WPAC, WPNS pair and operates over TCP. As the WPPTP is connection-oriented, after establishment of a connection, the WPNS and WPAC maintain state for each workstation attached to a WPAC. A session is created when end-to-end PPP connection is attempted between a workstation and the WPNS. The radio packets related to a session are then sent over the tunnel between the WPAC and WPNS.

The control connection is a standard TCP session over which WPPTP call control and management information is passed. For each WPAC-WPNS pair both a tunnel and a control connection exist. The control connection is responsible for establishment, management, and release of sessions carried through the tunnel. In this way a WPNS is notified of an incoming packet at an associated WPAC and a WPAC is instructed to place an outgoing call.

A control connection can be established by either the WPNS or the WPAC. Following the establishment of the required connection, the WPNS and WPAC establish exchange information about basic operating capabilities of the WPAC and WPNS. Once the control connection is established, the WPAC or WPNS may initiate data exchange. The control connection can also carry management related messages.

WPPTP requires the establishment of a tunnel for each communicating WPNS-WPAC pair. This tunnel is used to carry all user data exchange session PPP packets for data exchange sessions involving a given WPNS-WPAC pair. A key which is present in, for example the GRE header indicates which session a particular PPP packet belongs to. In this manner, PPP packets are multiplexed and demultiplexed over a single tunnel between a given WPNS-WPAC pair. The GRE header also contains acknowledgment and sequencing information that is used to perform some level of congestion-control and error detection over the tunnel. Again the control connection is used to determine rate and buffering parameters that are used to regulate the flow of PPP packets for a particular data exchange session over the tunnel.

Moreover, other control messages and management messages, such as connection reply, echo request, echo reply, outgoing and incoming call request, call clear request and disconnection messages, as well as error messages are transmitted between the WPAC and WPNS.

As mentioned above, the user data carried by the WPPTP protocol are PPP data packets. PPP packets are carried between the WPAC and WPNS, encapsulated in GRE packets which in turn are carried over IP.

For flow control a sliding window protocol may be used on the WPPTP by each side of the data exchange. The GRE protocol allows packet acknowledgments to be piggybacked on data packets. Acknowledgments can also be sent separately from data packets.

One feature of the WPPTP sliding window protocol is that it allows the acknowledgment of multiple packets with a single acknowledgment. All outstanding packets with a sequence number lower or equal to the acknowledgment number are considered acknowledged. Time-out calculations are performed using the time the packet corresponding to the highest sequence number being acknowledged was transmitted.

In a typical application a subscriber calls, for example an Intemet Service Provider (ISP), to request for a connection. The ISP assigns a radio channel for connection, which may be initiated by the subscriber or automatically by the computer unit. Then the connection will be established by the subscriber running, for example a browser programme over the radio. The ISP then mails other initiation instructions by sending an initiation e-mail. The established connection will then appear as a normal network/Internet/Interanet connection.

In another application, a remote employee may wish to use a client station to connect to the computer network (local/wide area network) of his/her company by using the radio equipment (TNC, transceiver) connected to the client station. The entire computer network or parts of it can, according the invention, be a wireless, radio packet-based network. The employee may directly connect to the network by using special channel assigned to the transceiver or buy the service from a radio-based network service provider, which can connect the client station to the company network. The service then will be initiated as a normal network connection with full functionality between the client station and the company network and the employee can use services such as e-mail, LAN-connection services, file transfer etc.

In yet another application the client workstation, for example in a submarine (in a submerged position), can directly be connected to a remote network, service provider or server by sending connection request messages in variety of channels. The connection request messages are provided with unique identity of the network/service provider that the client wishes to contact. The receiving station(s) at the service provider site scans through all or special channels assigned to it and if it (they) detects a connection request directed to it, it will then lock to the frequency and a network connection will be established, e.g. through tunnelling and the client will login. The usual login procedures such as password and user id control will run.

The wireless network according to the invention is suitable and easily implemented, for example in an inter-planetary application having long distances between the network nodes. Depending on the frequency and protocols used, it is possible to install routers and amplification devices as satellites and planets which will give a travellers in the future and today's research satellites and unmanned vessels to access a network server (or a network such as Internet) for information exchange.

The embodiments described above are merely for exemplifying reasons, thus, the TNCs, WPACs and WPNSs may be integrated in the computers or the transceivers. A transceiver and a TNC, WPAC or WPNS could be integrated in one common device, such as PCMCIA card or plug-in board for easy installation into mobile or stationary computers.

The invention is not limited the illustrated and described embodiments, but can be varied in a number of ways without departing from the scope of the appended claims and the arrangement and the method can be implemented in various ways depending on application, functional units, needs and requirements etc.

In yet another preferred embodiment some or all devices included in the network can be provided with a reporting functionality, so-called "heartbeat", which reports the condition of the devices to the network or other devices in the network. The reporting may be carried out by poling each device, i.e. sending a condition request to the devices. It is also possible to arrange the devices to propagate a condition report in predetermined time period. The heartbeat is preferably used when no communication is carried out.

## Claims

1. Arrangement for providing wireless data communication services, between a client station (10) and a service providing station (15) and/or a computer network (13, 33), each of the client station (12), service providing station (15) or the computer network (13, 33) being connected to at least one radio transceiver (11, 12) and each being arranged with means (20, 30, 31) to convert data to be transmitted to data packets or data packets to data,
*characterised in*
that the radio transceiver (11, 12) is arranged to transmit and/or receive data packets with at least one predetermined, by a user determined or randomly selected low radio frequency, said low radio frequency being within a range of about 1 kHz to about 30 MHz, preferably one or several of: 100-1800 kHz, 1810-1850 kHz, 3500-3800 kHz, 7000-7100 kHz, 10100-10150 kHz, 14000-14350 kHz, 18068-18168 kHz, 21000-21450 kHz, 24890-24990 kHz and 28000-29700 kHz bands.

2. Arrangement according to claim 1,
*characterised in,*
that said conversion means (20) is a terminal node controller, which automatically divides computer generated messages to be transmitted into data packets with a destination address, keys a transmitting function of the transceiver and sends the data packets through the transceiver.

3. Arrangement according to any one of claims 1 or 2,
*characterised in*
that the transceiver scans said low radio frequencies for detection of a data packet.

4. Arrangement according to any one of claims 1 - 3,
*characterised in*
that data is compressed before transmission.

5. Arrangement according to any one of claims 1 to 4,
*characterised in*
that multiple packets are transmitted on each frequency and/or channels are shared and/or packets are arranged with digital signatures.

6. Arrangement according to any one of claims 1 to 5,
*characterised in*
that packets are encrypted.

7. The network arrangement according to any of claims 1-6,
*characterised in*
that the client station is arranged with a security key, and that an authentication device is arranged to provide an additional layer of security, by verifying whether a client station requesting access to the service provider station posses the security key before access to the service provider is accepted.

8. The network arrangement according to any of claims 1-6,
*characterised in*
that the security arrangement consists of two hardware devices: a security host and a security card, the security host being arranged between the service provider station and the communication means,
that the security card generates different access codes every time unit, which are synchronized with a code generated at the security host every time unit and
that at connection time the client sends the code generated by the security card to the host and the code is correct, the security host accepts connection of the client with the service provider server.

9. The network arrangement according to any of claims 1-6,
*characterised in*
that it includes a security host, which prompts the client to enter a username and a password, said security host being arranged to allow the service provider station to initialize the communication means before running the security functions and to directly initialize the communication means connected to the security host without security checks from the security host, before access being accepted.

10. An at least partly wireless data communication network system, including at least one client workstation (10) and at least one service provider station, the wireless data communication being carried out by means of radio signals generated by radio transmitting stations connected to said at least one client workstation (10) and at least one service provider station, in form of data packets,
*characterised in*
that the client workstation and the service provider station each are arranged with means (30, 31) to generate a communication protocol (WPPTP) which allows a Point to Point Protocol (PPP) to be tunnelled through an IP network over said radio transmitting stations.

11. The system of claim 10,
*characterised in*
that said communication protocol (WPPTP) also queries the status of communicating stations, provides in-band management, allocated communication channels and place outgoing calls, notifies the service provider on incoming calls, transmits and receives user data with follow control in both directions, and notifies the service provider about disconnected calls.

12. The system of claim 10,
*characterised in*
that said communication protocol (WPPTP) uses an enhanced Generic Routing Encapsulation (GRE) mechanism to provide a flow and congestion-controlled encapsulated data packets.

13. The system of claim 10,
*characterised in*
that said tunnel is defined between pair of Wireless Network access Server (WPNS) and a communication protocol Access Concentrator (WPAC).

14. The system of claim 10,
*characterised in*
that the communication protocol (WPPTP) allows functions of devices (32) for providing client stations temporary, on-demand point-to-point wireless network access, to be separated using a client-server architecture.

15. The system according to any one of claims 10-14,
*characterised in*
that plurality of connection sessions is multiplexed on a single tunnel.

16. The system according to any one of claims 10-14,
*characterised in*
that the point-to-point protocol packets are multiplexed and demultiplexed over a single tunnel.

17. The system according to claim 13,
*characterised in*
that the communication protocol Access Concentrator (WPAC) is arranged to interface a network (33) and control radio transceivers (12) or terminal adapters, logically terminate a communications session of a point-to-point-protocol link control protocol, and if needed participate in point-to-point-protocol authentication procedures.

18. The system according to claim 13,
*characterised in*
that the Wireless Network access Server (WPNS) is arranged for channel aggregation and bundle management for point-to-point-protocol multilink protocol, logical termination of various point-to-point-protocol network control protocols and multiprotocol routing and bridging.

19. The system according to any one of claims 10-17,
*characterised in*
that radio communication is carried out over low frequency band, preferably in range of about 1 kHz to about 30 MHz.

20. Method for wireless data communication between a client station and a service provider, each being arranged with means to generate data packets and each being connected to a radio transceiver,
*characterised in*
that the method comprises the steps of:
- arranging a direct communications path, so-called tunnel, between the client station and the service provider,
- generating a communication protocol (WPPTP) which allows a Point to Point Protocol (PPP) to be tunnelled through an Intemet protocol network over said communication path,
- transmitting or receiving said communication protocol by means of said transceivers, and
- transferring said received communication protocol to or from a computer instruction signal.

21. Method according to claim 20,
characterised by
further steps of:
- establishing a Control Connection, controlling the tunnel and sessions assigned to the tunnel,
- maintaining a state for each client station connected,
- creating a session when an end-to-end point-to-point protocol connection is attempted between a client station and a Network access Server (WPNS),
- sending data packets related to a communication session over the tunnel between the communication protocol Access Concentrator (WPAC) and said Network access Server (WPNS).

22. Method according to claim 21,
*characterised in*
that the control connection is a standard transfer control protocol (TCP) session over which communication protocol (WPPTP) call control and management information are passed.

23. Method according to claim 21,
*characterised in*
that for each communication protocol Access Concentrator (WPAC) and Network access Server (WPNS) pair both a tunnel and a control connection exists.

24. Method according to claim 21,
*characterised in*
that the control connection is responsible for establishment, management, and release of communication sessions carried through the tunnel.

25. Method according to claim 21,
*characterised in*
that control connection can be established by either the communication protocol Access Concentrator (WPAC) or the Network access Server (WPNS).

26. Method according to claim 24,
*characterised in*
that a sliding window protocol for flow control through the tunnel is used on the communication protocol by each side of the data exchange.

27. Method according to claim 20,
*characterised in*
that the sliding window protocol allows acknowledgment of multiple packets with a single acknowledgment, and that all outstanding packets with a sequence number lower or equal to the acknowledgment number are considered acknowledged.

28. Method according to claim 27,
*characterised in*
that time-out calculations are performed using a time that the data packet corresponding to a highest sequence number being acknowledged is transmitted.
